# EUROPEAN PATENT APPLICATION

(11) **EP 4 513 981 A1**
(43) Date of publication of application: **26.02.2025**
(21) Application number: 23802586.0
(22) Date of filing: 17.04.2023
(51) Int. Cl.: H04W 52/02

(54) **BASE STATION ENERGY SAVING METHOD, BASE STATION, TERMINAL DEVICE, AND STORAGE MEDIUM**

(30) Priority: 10.05.2022 CN 202210507468
(71) Applicant: ZTE Corporation, Shenzhen, Guangdong 518057 (CN)
(72) Inventor: NIU, Li, Shenzhen, Guangdong 518057 (CN); GAO, Yuan, Shenzhen, Guangdong 518057 (CN); SHA, Xiubin, Shenzhen, Guangdong 518057 (CN)
(74) Representative: Aipex B.V.
(86) International application number: PCT/CN2023/088582
(87) International publication number: WO 2023/216811

(57) **Abstract**

Provided are a base station energy saving method, a base station, a terminal device, and a storage medium. The base station energy saving method is applied to the base station. The base station energy saving method includes determining an energy saving mode; and performing signal processing corresponding to the energy saving mode.

## Description

### TECHNICAL FIELD

The present application relates to the field of wireless communications, particularly a base station energy saving method, a base station, a terminal device, and a storage medium.

### BACKGROUND

Wireless communication technologies have evolved to the fifth generation (5G). In the 5G technology, beamforming has been widely applied. Beamforming utilizes many miniature millimeter-level antenna sensors arranged in a rectangular array, and after the parameters of the basic antenna units within the array and different transmission times of signals from the antenna sensors are artificially adjusted, concentrated, directional, and stronger electromagnetic wave beams are created to make signals received by the receiver achieve the optimal effect.

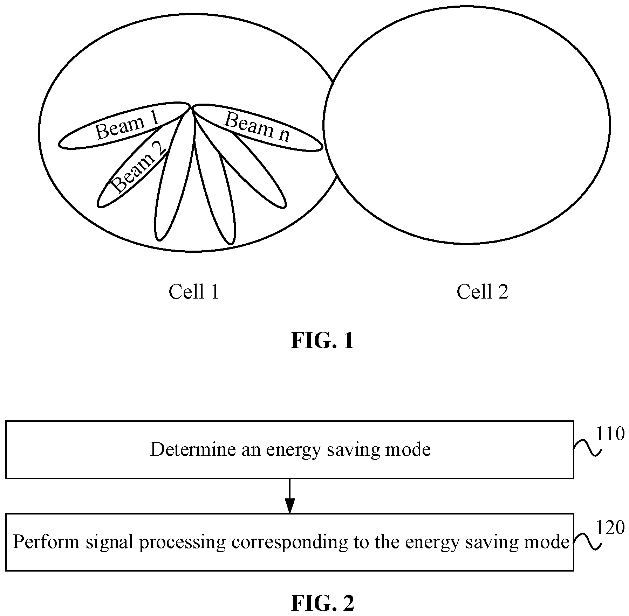

Referring to FIG. 1, in network deployment, a certain area has coverage not only by cells but also by beams. Initially, everyone focused on the various benefits brought by the 5G communication technology, such as higher speed, wider bandwidth, lower latency, and higher connection density, thus overlooking the costs of achieving high performance. With the development of 5G communication technology, the issue of high energy consumption by base stations has gradually become prominent. Electricity costs become a significant portion of network operating expenses, making the reduction of energy consumption of a base station a pressing problem required to be addressed. The primary reason for the significant increase in energy consumption by 5G base stations is the increase in the number of antennas. 5G base stations generally use matrix antennas to achieve beamforming, support more users, and cover a larger area. However, the dramatic increase in the number of antennas in 5G base stations has also led to a rapid rise in energy consumption. For current operators, the urgent problem to be solved is how to reduce the energy consumption of base stations while ensuring the communication quality.

### SUMMARY

A main object of embodiments of the present application is to provide a base station energy saving method, a base station, a terminal device, and a storage medium, thereby controlling the base station to enter an energy saving mode, dynamically adjusting the working state of the base station, and reducing energy consumption on the premise that the communication quality is ensured.

Embodiments of the present application provide a base station energy saving method. The method is applied to a base station. The method includes determining the energy saving mode; and performing signal processing corresponding to the energy saving mode.

Embodiments of the present application also provide another base station energy saving method. The method is applied to a terminal device. The method includes acquiring indication information of a base station; and detecting resources according to the energy saving mode corresponding to the indication information.

Embodiments of the present application also provide a base station. The base station includes at least one processor; and a memory configured to store at least one program.

When the at least one program is executed by the at least one processor, the at least one processor performs any base station energy saving method of embodiments of the present application.

Embodiments of the present application also provide a terminal device. The terminal device includes at least one processor; and a memory configured to store at least one program.

When the at least one program is executed by the at least one processor, the at least one processor performs any base station energy saving method of embodiments of the present application.

Embodiments of the present application also provide a computer-readable storage medium storing at least one program which, when executed by at least one processor, causes the at least one processor to perform any base station energy saving method of embodiments of the present application.

### BRIEF DESCRIPTION OF DRAWINGS

FIG. 1 is a diagram of network deployment according to the related art.
FIG. 2 is a flowchart of a base station energy saving method according to embodiments of the present application.
FIG. 3 is a flowchart of a base station energy saving method according to embodiments of the present application.
FIG. 4 is a flowchart of another base station energy saving method according to embodiments of the present application.
FIG. 5 is a flowchart of another base station energy saving method according to embodiments of the present application.
FIG. 6 is an example diagram of signal sending according to embodiments of the present application.
FIG. 7 is an example diagram of signal sending according to embodiments of the present application.
FIG. 8 is a flowchart of a base station energy saving method according to embodiments of the present application.
FIG. 9 is a flowchart of a base station energy saving method according to embodiments of the present application.
FIG. 10 is a flowchart of another base station energy saving method according to embodiments of the present application.
FIG. 11 is a flowchart of a base station energy saving method according to embodiments of the present application.
FIG. 12 is a flowchart of another base station energy saving method according to embodiments of the present application.
FIG. 13 is a block diagram of a base station energy saving apparatus according to embodiments of the present application.
FIG. 14 is a block diagram of another base station energy saving apparatus according to embodiments of the present application.
FIG. 15 is a block diagram of a base station according to embodiments of the present application.
FIG. 16 is a block diagram of a terminal device according to embodiments of the present application.

### DETAILED DESCRIPTION

It is to be understood that the embodiments described herein are intended to explain the present application, not to limit the present application.

In the subsequent description, words for representing elements, such as "module", "component" and "unit" are merely used for facilitating the description of the present application and have no particular meanings in themselves. Therefore, "module", "component" and "unit" may be used in a mixed manner.

FIG. 2 is a flowchart of a base station energy saving method of this embodiment of the present application. This embodiment of the present application may be applied to the case where a base station enters an energy saving mode. The method may be performed by a base station energy saving apparatus. The apparatus is generally integrated in the base station. Referring to FIG. 2, the method of this embodiment of the present application includes the following steps:
In step 110, an energy saving mode is determined.

The energy saving mode may be a state in which the base station performs signal processing according to a certain mode. For example, the base station in different energy saving modes can transmit or receive signals according to different energys. For another example, the base station in different energy saving modes has different energy saving mode durations. For another example, the base station in different energy saving modes can transmit or receive different types of signals.

In this embodiment of the present application, the base station may determine the energy saving mode the base station enters, where the manner in which the base station enters the energy saving mode is not limited here. For example, the base station may determine the energy saving mode the base station enters according to the load of the base station, an upper-layer instruction, a channel state, or Quality of Service requirements.

In step 120, signal processing corresponding to the energy saving mode is performed.

Specifically, the base station may perform corresponding signal processing according to the determined energy saving mode. It is to be understood that the base station may be configured with different signal processing modes when in different energy saving modes. After determining the corresponding energy saving mode, the base station may acquire the corresponding signal processing mode according to the corresponding energy saving mode. For example, in the first energy saving mode, the base station may receive or send no signal.

In this embodiment of the present application, an energy saving mode is determined, and signal processing corresponding to the energy saving mode is performed so that energy saving of the base station is implemented under different situations, and the energy consumption of the base station is reduced while the communication quality is ensured.

Further, based on the previous embodiments of the present application, the energy saving mode includes at least one of the following: a microsleep mode, a light sleep mode, or a deep sleep mode.

In this embodiment of the present application, at least three energy saving modes may be configured according to the duration in which the base station is disabled and according to the type of the signal transmitted. A microsleep mode, a light sleep mode, and a deep sleep mode may be configured successively in an order from the longest duration in which the base station is disabled to the shortest duration in which the base station is disabled. It is to be understood that the type of the energy saving mode may not be limited to the preceding modes. The types of the energy saving mode may be refined according to the duration in which the base station is disabled and according to the type of the signal transmitted.

Further, based on the previous embodiments of the present application, the time granularity of the duration of the energy saving mode includes at least one of the following: a symbol level, a millisecond level, a ten-millisecond level, a hundred-millisecond level, a second level, or a minute level.

In this embodiment of the present application, the energy saving modes of the base station may be classified according to the time granularity of the duration. Different energy saving modes may have different time granularities in terms of the duration. It is to be understood that the duration of each energy saving mode may have one or more time granularities.

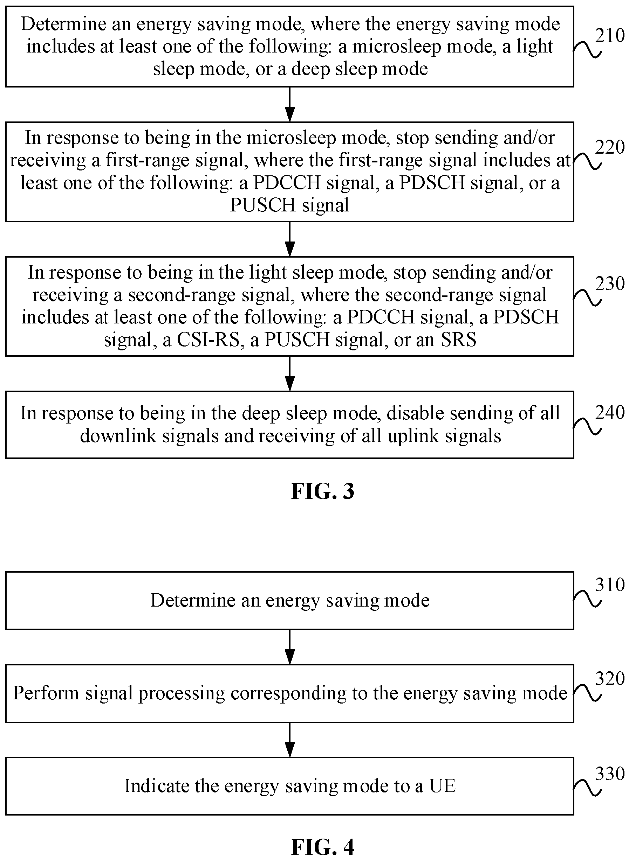

FIG. 3 is a flowchart of a base station energy saving method according to embodiments of the present application. This embodiment of the present application is embodied based on the previous embodiments of the present application. Signal processing in different energy saving modes is embodied in this embodiment of the present application. Referring to FIG. 3, the method of this embodiment of the present application includes the following steps:
In step 210, an energy saving mode is determined. The energy saving mode includes at least one of the following: a microsleep mode, a light sleep mode, or a deep sleep mode.
   In this embodiment of the present application, the energy saving mode of the base station may include a microsleep mode, a light sleep mode, and a deep sleep mode. The base station may determine an energy saving mode from the microsleep mode, the light sleep mode, and the deep sleep mode.
In step 220, in response to being in the microsleep mode, sending and/or receiving a first-range signal is stopped. The first-range signal includes at least one of the following: a physical downlink control channel (PDCCH) signal, a physical downlink shared channel (PDSCH) signal, or a physical uplink shared channel (PUSCH) signal.

Specifically, in response to the base station determining that the energy saving mode is the microsleep mode, the base station may stop transmitting a PDCCH signal and a PDSCH signal or may stop receiving a PUSCH signal.

In step 230, in response to being in the light sleep mode, sending and/or receiving a second-range signal is stopped. The second-range signal includes at least one of the following: a PDCCH signal, a PDSCH signal, a channel state information reference signal (CSI-RS), a PUSCH signal, or a channel sounding reference signal (SRS).

In this embodiment of the present application, in response to the base station being in the light sleep mode, the base station stops transmitting a PDCCH signal, a PDSCH signal, and a CSI-RS and may stop receiving a PUSCH signal and an SRS.

Further, in another embodiment, in the light sleep mode, a sparse periodic CSI-RS and/or SSB is sent.

Specifically, in the light sleep mode, the base station reduces impact on the UE and may also transmit a sparse periodic CSI-RS or SSB. The transmitting frequency of the sparse period may be less than a signal transmitting frequency in the normal mode. For example, the sparse period may be 100 ms or 200 ms.

In step 240, in response to being in the deep sleep mode, sending of all downlink signals and receiving of all uplink signals are disabled.

Specifically, in response to the base station determining that the energy saving mode is the deep sleep mode, the base station may transmit no downlink signal and receive no uplink signal.

Further, in another embodiment, in the deep sleep mode, a sparse periodic SSB is sent, or a sparse periodic physical random access channel (PRACH) is received.

Specifically, in response to the base station determining that the energy saving mode is the deep sleep mode, the base station may transmit an SSB or receive a PRACH in a sparse period. The signal transmitting frequency or the signal receiving frequency of the sparse period may be less than the signal transmitting frequency or the signal receiving frequency of the base station in the normal mode. The sparse period may be 100 ms or 200 ms.

Further, based on the previous embodiments of the present application, the energy saving mode may be determined according to at least one of the following: a beam load, a cell load, a traffic data volume, or a traffic delay sensitivity.

In this embodiment of the present application, the base station may select an appropriate energy saving mode based on the beam load, the cell load, the traffic data volume, and the traffic delay sensitivity of the bearer traffic.

Further, based on the previous embodiments of the present application, determining the energy saving mode includes determining the energy saving mode as the non-energy-saving mode under a first preset condition, where the first preset condition includes at least one of the following: the beam load is greater than a first beam load threshold, the cell load is greater than a first cell load threshold, the traffic data volume is greater than a first traffic volume threshold, or the traffic delay sensitivity is delay sensitive; determining the energy saving mode as the microsleep mode under a second preset condition, where the second preset condition includes at least one of the following: the beam load is less than or equal to the first beam load threshold and greater than a second beam load threshold, the cell load is less than or equal to the first cell load threshold and greater than a second cell load threshold, the traffic data volume is less than or equal to the first traffic volume threshold and greater than a second traffic volume threshold, or the traffic delay sensitivity is delay insensitive; determining the energy saving mode as the light sleep mode under a third preset condition, where the third preset condition includes at least one of the following: the beam load is less than or equal to the second beam load threshold and greater than a third beam load threshold, the cell load is less than or equal to the second cell load threshold and greater than a third cell load threshold, the traffic data volume is less than or equal to the second traffic volume threshold and greater than a third traffic volume threshold, or the traffic delay sensitivity is delay insensitive; and determining the energy saving mode as the deep sleep mode under a fourth preset condition, where the fourth preset condition includes at least one of the following: the beam load is less than or equal to the third beam load threshold, the cell load is less than or equal to the third load threshold, the traffic data volume is less than or equal to the third traffic volume threshold, or the traffic delay sensitivity is delay insensitive.

In this embodiment of the present application, the energy saving mode of the base station may be determined according to at least one of the following: a beam load, a cell load, a traffic data volume, or a traffic delay sensitivity.

Specifically, the energy saving mode is the non-energy-saving mode when at least one of the following is satisfied: The beam load of the base station is greater than a first beam load threshold, the cell load of the base station is greater than a first cell load threshold, the traffic data volume of the base station is greater than a first traffic volume threshold, or the traffic delay sensitivity of the base station is delay sensitive.

Specifically, the energy saving mode is the microsleep mode when at least one of the following is satisfied: The beam load of the base station is less than or equal to the first beam load threshold and greater than a second beam load threshold, the cell load of the base station is less than or equal to the first cell load threshold and greater than a second cell load threshold, the traffic data volume of the base station is less than or equal to the first traffic volume threshold and greater than a second traffic volume threshold, or the traffic delay sensitivity of the base station is delay insensitive.

Specifically, the energy saving mode is the light sleep mode when at least one of the following is satisfied: The beam load of the base station is less than or equal to the second beam load threshold and greater than a third beam load threshold, the cell load of the base station is less than or equal to the second cell load threshold and greater than a third cell load threshold, the traffic data volume of the base station is less than or equal to the second traffic volume threshold and greater than a third traffic volume threshold, or the traffic delay sensitivity of the base station is delay insensitive.

Specifically, the energy saving mode is the deep sleep mode when at least one of the following is satisfied: The beam load of the base station is less than or equal to the third beam load threshold, the cell load of the base station is less than or equal to the third load threshold, the traffic data volume of the base station is less than or equal to the third traffic volume threshold, or the traffic delay sensitivity of the base station is delay insensitive.

In an example embodiment, when saving energy, the base station considers disabling sending of some signals. The disabled state may last several symbols, several hundreds of milliseconds, several hundreds of seconds, several seconds, or even several minutes. In different disabled states, different energy saving degrees are present. The longer the energy saving duration, the better the energy saving effect. However, when the base station saves energy, the impact on the UE needs to be considered. Disabling sending or receiving of different signals for different durations will affect the UE differently.

Three disabled modes are defined for the base station:
1. Microsleep: The duration may be several symbols or several milliseconds. While the base station is being disabled, scheduling of the UE may be affected. The base station may disable sending of signals such as a PDCCH and a PDSCH and also disable receiving of signals such as a PUSCH. In this state, the UE may perform one of the following activities: not monitoring a physical downlink control channel (PDCCH), not sending an uplink shared channel (ULSCH), not reporting channel state information (CSI), not sending a physical uplink control channel (PUCCH), reporting an L1-reference signal received energy (L1-RSRP), clearing a hybrid automatic repeat request (HARQ) buffer, deactivating all bandwidth parts (BWPs), or clearing all uplink resources. The uplink resources may include a configured uplink grant resource, an SPS resource, and an SR resource).
2. Light sleep: The duration may be dozens of milliseconds or several hundreds of milliseconds. While the base station is being disabled, beam receiving or sending of the UE may be affected. The base station may disable sending of signals such as a PDCCH, a PDSCH, a CSI-RS, and an SSB and also disable receiving of signals such as a PUSCH and an SRS. To reduce the impact on the UE, the base station may also send a sparse CSI-RS or SSB in a period of, for example, 100 ms or receive a sparse SRS. In this state, the UE may perform one of the following activities: not monitoring a PDCCH, not monitoring a CSI-RS resource, receiving a sparse CSI-RS resource, not monitoring an SSB, receiving a sparse SSB, not sending a physical ULSCH, not sending an SRS, sending a sparse SRS, not reporting CSI, not sending a PUCCH, sending a sparse L1-RSRP, clearing a HARQ buffer, deactivating all BWPs, or clearing all uplink resources (including a configured uplink grant resource, an SPS resource, and an SR resource).
3. Deep sleep: The duration may be several hundreds of milliseconds, several seconds, several minutes, or even longer. While the base station is being disabled, UE connection may be affected, that is, the UE may have a radio link failure or cannot access a cell. The base station may disable sending of all downlink signals and receiving of all uplink signals. To reduce the impact on the UE, the base station may also send a sparse SSB in a period of, for example, 200 ms or receive a sparse PRACH. In this state, the UE may perform one of the following activities: not monitoring a PDCCH, not monitoring a CSI-RS resource, receiving a sparse CSI-RS resource, not monitoring an SSB, receiving a sparse SSB, not sending a ULSCH, not sending an SRS, not reporting CSI, not sending a PUCCH, clearing a HARQ buffer, deactivating all BWPs, or clearing all uplink resources (including a configured uplink grant resource, an SPS resource, and an SR resource).

When in the disabled mode, the base station may consider the cell load in, for example, the following manners:
1. When the beam load or the cell load is heavy, the traffic data volume is large, and the traffic delay sensitivity is delay sensitive, the base station may consider disabling no beam or cell.
2. When the beam load or the cell load is medium, the traffic data volume is small, and the traffic delay sensitivity is delay insensitive, the base station may consider microsleep of beams or cells.
3. When the beam load or the cell load is light, the traffic data volume is small, the traffic delay sensitivity is delay insensitive, and a small number of UEs are carried, the base station may consider light sleep of beams or cells.
4. When the beam load or the cell load is extremely light, and a small number of UEs or no UE is carried, the base station may consider deep sleep of beams or cells.

In this embodiment of the present application, the energy saving mode of the base station may also be referred to as, for example, a sleep state, a non-active state, or a light-load state. The non-energy-saving state of the base station may be, for example, a normal state, an active state, or a heavy-load state.

FIG. 4 is a flowchart of another base station energy saving method according to embodiments of the present application. This embodiment of the present application is embodied based on the previous embodiments of the present application. Referring to FIG. 4, the method of this embodiment of the present application includes the following steps:
In step 310, an energy saving mode is determined.
In step 320, signal processing corresponding to the energy saving mode is performed.
In step 330, information about the energy saving mode is indicated.

In this embodiment of the present application, the base station may also indicate the energy saving mode of the base station to the terminal, and the indication manner includes an explicit indication or an implicit indication. For example, the base station may indicate the energy saving mode of the base station by using signaling. For another example, the base station may indicate the energy saving mode which the base station enters to the terminal implicitly in the case where the base station does not receive feedback from the terminal.

Further, based on the previous embodiments of the present application, indicating information about the energy saving mode includes at least one of the following: configuring periodic signal resources used by the terminal device in a link recovery, a beam monitoring failure, and a candidate beam period; or configuring periodic signal resources used by the terminal device in radio link monitoring.

In this embodiment of the present application, the base station may configure the signal resources of the terminal device to indicate the energy saving mode of the base station. The signal resources may include configuring periodic signal resources used by the terminal device in a link recovery, a beam monitoring failure, and a candidate beam period; or configuring periodic signal resources used by the terminal device in radio link monitoring.

Further, based on the previous embodiments of the present application, the signal resources include a CSI-RS resource and an SSB resource.

Specifically, the signal resources configured by the base station to indicate the energy saving mode may be a CSI-RS resource or an SSB resource.

Further, based on the previous embodiments of the present application, the signal resources are configured by using a radio resource control (RRC) message.

Specifically, the base station may configure, by using an RRC message, the signal resources for indicating the energy saving mode.

Further, based on the previous embodiments of the present application, configuration parameters of the signal resources include at least two of the following: start time, duration, and end time.

In this embodiment of the present application, the base station may configure the indication signal resources by using configuration parameters. The configuration parameters may include start time and end time, may include start time and duration, or may include end time and duration.

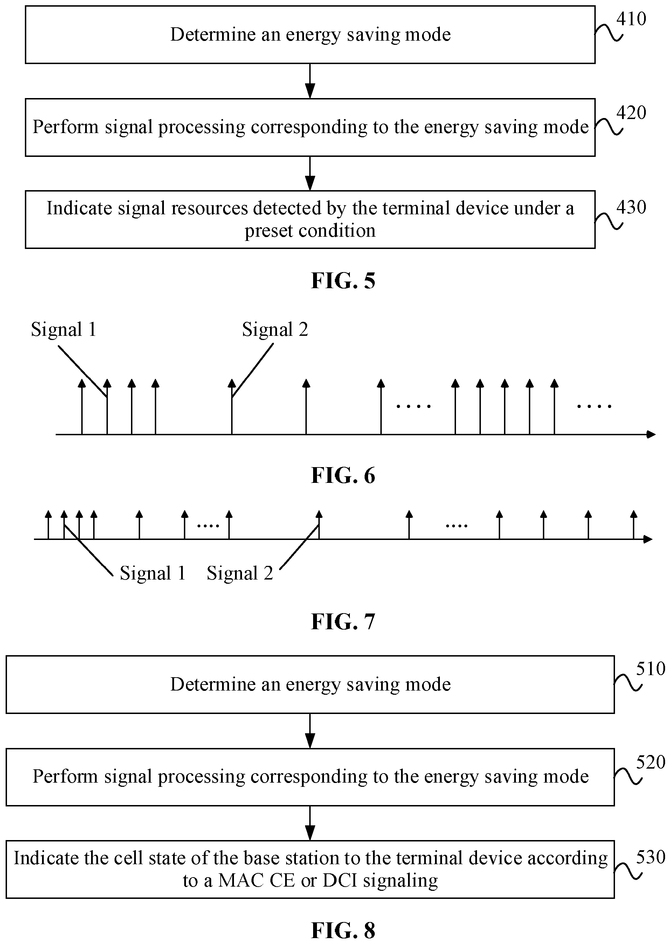

FIG. 5 is a flowchart of another base station energy saving method according to embodiments of the present application. This embodiment of the present application is embodied based on the previous embodiments of the present application. Referring to FIG. 5, the method of this embodiment of the present application includes the following steps:
In step 410, an energy saving mode is determined.
In step 420, signal processing corresponding to the energy saving mode is performed.
In step 430, signal resources detected by the terminal device under a preset condition are indicated.

In this embodiment of the present application, the base station may indicate, to the terminal device, detection of signal resources under a preset condition. The indication may include indication of the signal resources. It is to be understood that the preset condition may be preset by a protocol, indicated by the base station, or configured by an upper-layer signaling. The indicated signal resources detected by a device under different preset conditions may be of different types.

Further, based on the previous embodiments of the present application, the signal resources are configured for radio link monitoring, and the signal resources include a periodic CSI-RS resource or SSB resource, a semi-persistent CSI-RS resource or SSB resource, and a non-periodic CSI-RS resource or SSB resource.

Specifically, the signal resources indicated by the base station and detected by the terminal under a preset condition may be configured for radio link monitoring, and the signal resources include a periodic CSI-RS resource or SSB resource, a semi-persistent CSI-RS resource or SSB resource, and a non-periodic CSI-RS resource or SSB resource.

Further, based on the previous embodiments of the present application, the preset condition includes at least one of the following: A dense CSI-RS resource or SSB resource is disabled, the base station enters an energy saving state, the base station indicates an enabled CSI-RS resource or SSB resource to the terminal device, the terminal device detects that the base station enters an energy saving state, the terminal device detects that a dense CSI-RS resource or SSB resource is disabled, the terminal device detects a sparse CSI-RS or SSB signal, the base station enables a dense CSI-RS resource or SSB resource, the base station enters a non-energy-saving state, the base station indicates a disabled CSI-RS resource or SSB resource to the terminal device, the terminal device detects that the base station enters a non-energy-saving state, or the terminal device detects that a dense CSI-RS resource or SSB resource is enabled.

In this embodiment of the present application, the preset condition under which the terminal device detects signal resources includes at least one of the following: The base station disables a dense CSI-RS resource or SSB resource, the base station enters an energy saving state, the base station instructs the terminal device to enable a CSI-RS resource or SSB resource, the terminal device detects that the base station enters an energy saving state, the terminal device detects that a dense CSI-RS resource or SSB resource is disabled, the terminal device detects a sparse CSI-RS or SSB signal, the base station enables a dense CSI-RS resource or SSB resource, the base station enters a non-energy-saving state, the base station instructs the terminal device to disable a CSI-RS resource or SSB resource, the terminal device detects that the base station enters a non-energy-saving state, or the terminal device detects that a dense CSI-RS resource or SSB resource is enabled. Under different preset conditions, the terminal device may detect the same or different signal resources to match different energy saving modes of the base station.

In an example embodiment, when the base station decides to disable sending of some signals, the disabled state may last dozens of milliseconds or several hundreds of milliseconds, and the base station may disable a CSI-RS or SSB signal, that is, the base station is about to enter the energy saving mode. Because the CSI-RS or SSB signal is disabled, beam tracing, beam training, and beam management based on these signals may be affected. If the disabled time exceeds certain time, a beam failure may occur for the UE, that is, the UE cannot find a servicesuitable beam. If a beam failure occurs, the UE triggers a beam recovery process to find a suitable beam. If no beam is found, the UE selects any beam and initiates a RACH process on the PRACH resource corresponding to the beam. If the RACH process fails, the UE returns to the idle state when a radio link failure is triggered. It can be seen that if the base station disables the CSI-RS or SSB signal for a long time, a complex operation of the UE may be caused. To avoid this problem, the following methods may be used:
Method one: When the base station requires to disable a CSI-RS or SSB signal or requires to enter the energy saving state, the base station sends a CSI-RS or SSB. The base station configures a periodic CSI-RS or SSB resource, for example, signal 1, used by the UE in a link recovery, a beam monitoring failure, and a candidate beam. These signals are transmitted densely. Based on these signals, the UE monitors whether the beam can serve the UE. If the base station requires to disable sending of these signals, to prevent the UE from a beam failure, as shown in FIG. 6, the base station sends a CSI-RS or SSB, for example, signal 2. These signals are transmitted more sparsely. The frequency domain resource of signal 2 is consistent with that of signal 1. The period of signal 2 is a multiple of the period of signal 1. The start time of signal 2 is the sending time of signal 1.

The time (including start time, duration, or end time) of a CSI-RS or SSB (for example, signal 2) is also specified by the base station.

If the base station does not notify the UE of changes to the CSI-RS or SSB, the UE continues monitoring the CSI-RS or SSB according to the unchanged configuration.

If the base station notifies the UE of changes to the CSI-RS or SSB, the UE stops monitoring the unchanged CSI-RS or SSB and monitors the changed CSI-RS or SSB according to indication of the base station.

Method two: The base station indicates a CSI-RS or SSB resource to be detected under a certain condition. The base station configures the CSI-RS or SSB resource, these signals are the CSI-RS or SSB used in a link recovery, a beam monitoring failure, and a candidate beam and these signals may include a periodic CSI-RS resource or SSB resource, a semi-persistent CSI-RS resource or SSB resource, and a non-periodic CSI-RS resource or SSB resource. Resources configured by the base station include frequency domain resources and time domain resource of these signals. If the base station configures a periodic CSI-RS resource or SSB resource, the configuration also includes the start time and the period.

The configuration or transmission of these signals is associated with a preceding condition. The configuration of these signals is associated with the energy saving state. For example, when the base station enters the energy saving state, the period of the CSI-RS or SSB associated with the condition is longer.

When the condition is satisfied, the base station sends the CSI-RS or SSB signal, and the UE detects a beam based on these signals.

The condition may include at least one of the following: The base station disables a dense CSI-RS or SSB resource, the base station enters an energy saving state, the base station indicates an enabled or activated CSI-RS resource or SSB resource to the UE, the UE detects that the base station enters an energy saving state, the UE detects that a dense CSI-RS or SSB signal is disabled, or the UE detects a sparse CSI-RS or SSB signal.

If the UE learns that a condition is satisfied, the UE does not monitor the CSI-RS or SSB under other conditions, but monitors the CSI-RS or SSB corresponding to this condition.

The base station indicates a CSI-RS resource or SSB resource not to be detected under a certain condition. When the condition is satisfied, the base station does not send the CSI-RS or SSB signal, and the UE does not detect a beam based on these signals. The condition may include at least one of the following: The base station enables a dense CSI-RS or SSB resource, the base station enters a non-energy-saving state, the base station indicates a disabled or deactivated CSI-RS resource or SSB resource to the UE, the UE detects that the base station enters an activated state, or the UE detects that a dense CSI-RS or SSB signal is enabled.

When the condition is satisfied, the base station stops sending the CSI-RS or SSB signal, and the UE stops detecting a beam based on these signals.

The base station may configure the CSI-RS resource or SSB resource by using an RRC message. The RRC message may be RRCReconfiguration, RRCSetup, or RRCResume. The resource may also be broadcast by using system information.

In an example embodiment, when the base station decides to disable sending of some signals, the disabled state may last several hundreds of milliseconds or several seconds, and the base station may disable a CSI-RS or SSB signal, that is, the base station is about to enter the energy saving mode. Because the CSI-RS or SSB signal is disabled, radio link monitoring based on these signals will be affected. If the disabled time exceeds certain time, a beam failure may occur for the UE, that is, the radio link of the UE cannot be maintained. If a radio link failure occurs, the UE triggers RRC reconstruction, or the UE returns to the idle state. It can be seen that if the base station disables the CSI-RS or SSB signal for a long time, the UE is disconnected.

To avoid this problem, possible methods are as follows:
Method one: When the base station requires to disable a CSI-RS or SSB signal or requires to enter the energy saving state, the base station sends a CSI-RS or SSB. The base station configures a periodic CSI-RS or SSB resource, for example, signal 1, used by the UE in radio link monitoring. These signals are transmitted densely. Based on these signals, the UE monitors whether the serving cell can serve the UE. If the base station requires to disable sending of these signals, to prevent the UE from a radio link failure, as shown in FIG. 7, the base station sends a CSI-RS or SSB, for example, signal 2. These signals are transmitted more sparsely. The frequency domain resource of signal 2 is consistent with that of signal 1. The period of signal 2 is a multiple of the period of signal 1. The start time of signal 2 is the sending time of signal 1. The time (including start time, duration, or end time) of a CSI-RS or SSB (for example, signal 2) is specified by the base station.
Method two: The base station indicates a CSI-RS or SSB resource to be detected under a certain condition. The base station configures the CSI-RS or SSB resource, these signals are used in radio link monitoring and may include a periodic CSI-RS resource or SSB resource, a semi-persistent CSI-RS resource or SSB resource, and a non-periodic CSI-RS resource or SSB resource. Resources configured by the base station include frequency domain resources and time domain resource of these signals. If the base station configures a periodic CSI-RS resource or SSB resource, the configuration also includes the start time and the period.

The configuration or transmission of these signals is associated with a preceding condition. The configuration of these signals is associated with the energy saving state. For example, when the base station enters the energy saving state, the period of the CSI-RS or SSB associated with the condition is longer.

When the condition is satisfied, the base station sends the CSI-RS or SSB signal, and the UE detects a beam based on these signals.

The condition may include at least one of the following: The base station disables a dense CSI-RS or SSB resource, the base station enters an energy saving state, the base station indicates an enabled or activated CSI-RS resource or SSB resource to the UE, the UE detects that the base station enters an energy saving state, the UE detects that a dense CSI-RS or SSB signal is disabled, or the UE detects a sparse CSI-RS or SSB signal.

The base station indicates a CSI-RS resource or SSB resource not to be detected under a certain condition. When the condition is satisfied, the base station does not send the CSI-RS or SSB signal, and the UE does not detect a beam based on these signals. The condition may include at least one of the following: The base station enables a dense CSI-RS or SSB resource, the base station enters a non-energy-saving state, the base station indicates a disabled or deactivated CSI-RS resource or SSB resource to the UE, the UE detects that the base station enters an activated state, or the UE detects that a dense CSI-RS or SSB signal is enabled.

When the condition is satisfied, the base station stops sending the CSI-RS or SSB signal, and the UE stops detecting a beam based on these signals.

The base station may configure the CSI-RS resource or SSB resource by using an RRC message. The RRC message may be RRCReconfiguration, RRCSetup, or RRCResume. The resource may also be broadcast by using system information.

FIG. 8 is a flowchart of a base station energy saving method according to embodiments of the present application. This embodiment of the present application is embodied based on the previous embodiments of the present application. Referring to FIG. 8, the method of this embodiment of the present application includes the following steps:
In step 510, an energy saving mode is determined.
In step 520, signal processing corresponding to the energy saving mode is performed.
In step 530, the cell state of the base station is indicated to the terminal device according to a medium access control control element (MAC CE) or downlink control information (DCI) signaling.

In this embodiment of the present application, the base station may send the MAC CE or DCI signaling to the terminal device, and the terminal device may determine the cell state of the base station according to the MAC CE or DCI signaling. The cell state can identify the energy saving mode of the base station.

In another example embodiment, the base station indicates the beam state of the base station to the terminal device according to the MAC CE or DCI signaling.

Specifically, the base station sends the MAC CE or DCI signaling to the terminal device, and the terminal device may determine the beam state of the base station according to the MAC CE or DCI signaling carrying a message. The beam state may identify the energy saving mode of the base station.

In another example embodiment, the base station indicates an activated or deactivated CSI resource or SSB resource according to the MAC CE or DCI signaling.

Specifically, the base station may send the MAC CE or DCI signaling to the terminal device. After receiving the MAC CE or DCI signaling, the terminal device may activate or detect a CSI resource or SSB resource or may deactivate a CSI resource or SSB resource.

Further, based on the previous embodiments of the present application, the MAC CE or DCI signaling carries at least one of the following information: a cell identity, an energy saving state indicator bit, time information, an activation identifier, a frequency domain identifier, a CSI-RS identifier, or an SSB identifier. The time information includes at least two of start time, duration, and end time.

Specifically, the MAC CE or DCI signaling sent by the base station may carry at least one of the following information: a cell identity, an energy saving state indicator bit, time information, an activation identifier, a frequency domain identifier, a CSI-RS identifier, or an SSB identifier. The terminal device may determine the state of the base station according to information in the MAC CE or DCI signaling to detect the energy saving mode of the base station. The time information may be the enabled time range of the MAC CE or DCI signaling. The time information may include at least two of start time, duration, or end time. For example, the time information may include the start time and the duration of the enabled time, may include the start time and the end time of the enabled time, or may include the duration and the end time of the enabled time.

In an example embodiment, the base station may send, to the UE, information for indicating the energy saving mode of the base station, and the UE may detect the energy saving mode of the base station by using the information. The methods involved are as follows:
Method one: The base station indicates the cell state by using the MAC CE or DCI. When the base station requires to enter or exit the energy saving state, the UE may be notified by using the MAC CE or DCI. The MAC CE or DCI may carry a cell identity, an energy saving state indicator bit, and time information. The cell identity may be the identifier or the index of the serving cell of the UE. The energy saving state indicator bit may be an indicator bit for indicating whether to activate energy saving. For example, in terms of one energy saving state indicator bit, 0 indicates that the base station deactivates the energy saving state, and 1 indicates that the base station activates the energy saving state or indicates the activated energy saving state. For example, in terms of two energy saving state indicator bits, 00 indicates that the base station deactivates the energy saving state, 01 indicates that the base station activates a microsleep, 10 indicates that the base station activates a light sleep, and 11 indicates that the base station activates a deep sleep. Information carried in the MAC CE or DCI is enabled after a period of time from the UE receives the MAC CE or DCI. The start time, the duration, or the end time may also be carried in the time information.
Method two: The base station indicates the beam state by using the MAC CE or DCI. When a certain beam of the base station is required to enter or exit the energy saving state, the UE may be notified by using the MAC CE or DCI. The MAC CE or DCI may carry a cell identity, a beam identity, an energy saving state indicator bit, and time information. The cell identity may be the identifier or the index of the serving cell of the UE. The energy saving state indicator bit may be an indicator bit for indicating whether to activate energy saving. For example, in terms of one energy saving state indicator bit, 0 indicates that the base station deactivates the energy saving state, and 1 indicates that the base station activates the energy saving state or indicates the activated energy saving state. For example, in terms of two energy saving state indicator bits, 00 indicates that the base station deactivates the energy saving state, 01 indicates that the base station activates a microsleep, 10 indicates that the base station activates a light sleep, and 11 indicates that the base station activates a deep sleep. The beam identifier may be a beam identifier or index, for example, a transmission configuration indication (TCI) identifier, a CSI-RS identifier, or an SSB identifier. Information carried in the MAC CE or DCI is enabled after a period of time from the UE receives the MAC CE or DCI. The start time, the duration, or the end time may also be carried in the time information.
Method three: The base station indicates an activated/deactivated CSI-RS or SSB by using the MAC CE or DCI. When a certain beam of the base station is required to enter the energy saving state, the UE may be notified by using the MAC CE or DCI. The MAC CE or DCI may carry an activation identifier, a cell identity, a frequency domain identifier, a CSI-RS or SSB identifier, and time information. The activation identifier indicates activation or deactivation. The cell identity may be the identifier or the index of the serving cell of the UE. The frequency domain identifier may be a BWP identifier. The CSI-RS or SSB identifier is the identifier of an activated/deactivated CSI-RS or SSB. Information carried in the MAC CE or DCI is enabled after a period of time from the UE receives the MAC CE or DCI. The start time, the duration, or the end time may also be carried in the time information.

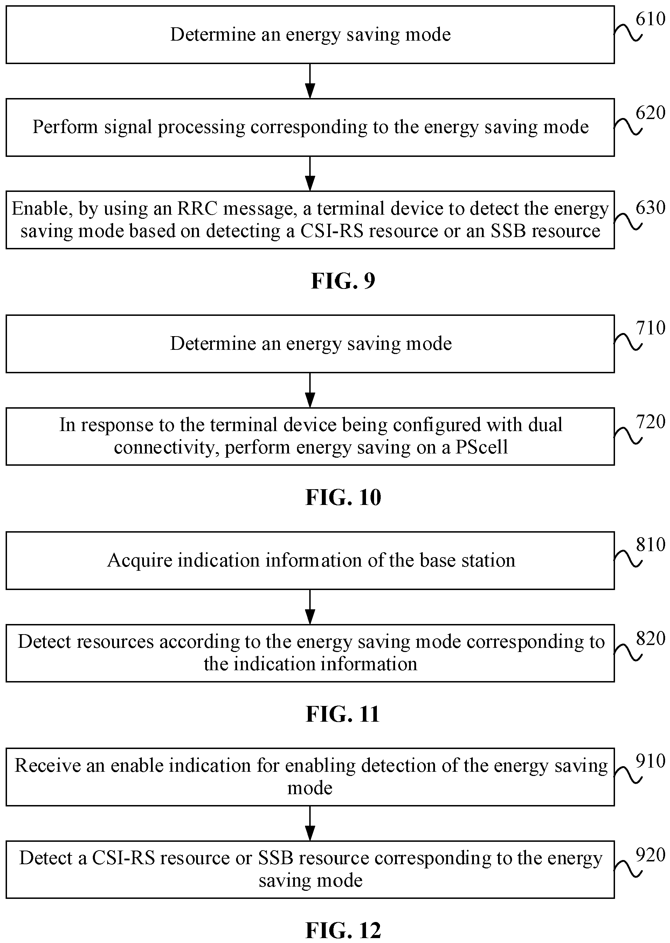

FIG. 9 is a flowchart of a base station energy saving method according to embodiments of the present application. This embodiment of the present application is embodied based on the previous embodiments of the present application. Referring to FIG. 9, the method of this embodiment of the present application includes the following steps:
In step 610, an energy saving mode is determined.
In step 620, signal processing corresponding to the energy saving mode is performed.
In step 630, a terminal device is enabled, by using an enable indication, to detect the energy saving mode.

In this embodiment of the present application, the base station may send an enable indication to the terminal device, and upon receiving the enable indication, the terminal device may detect the energy saving mode of the base station.

Further, in an embodiment, the terminal device is enabled, by using an RRC message, to detect a CSI-RS resource or SSB resource to determine the energy saving mode of the base station.

In this embodiment of the present application, the base station may send an RRC message to the terminal device so that the terminal device can detect a CSI-RS resource or SSB resource to determine the energy saving mode of the base station.

Further, in another embodiment, the terminal device is enabled, by using the system information, to detect a CSI-RS resource or SSB resource to determine the energy saving mode of the base station.

Specifically, the base station may also send system information to the terminal device. After receiving the system information, the terminal device may detect the CSI-RS resource or SSB resource and may determine the energy saving mode of the base station according to the detection result of the CSI-RS resource or SSB resource.

Further, based on the previous embodiments of the present application, the enable indication carries the threshold of the energy saving mode. The threshold includes at least one of the following: time period information, a maximum signal detection quantity threshold, or a minimum signal detection quantity threshold.

In this embodiment of the present application, the enable indication may carry a threshold for detecting an energy saving mode. The threshold includes at least one of the following: time period information, a maximum signal detection quantity threshold N1, or a minimum signal detection quantity threshold N2. The terminal device may detect a CSI-RS resource or SSC resource based on this threshold. When the resource detection result satisfies this threshold, the energy saving mode of the base station can be determined. The enable indication may include an RRC message or system information.

In an example embodiment, the UE may detect a signal resource by using the RRC message or the system information sent by the base station so that the UE can determine the energy saving mode of the base station. Specifically, the UE detects the energy saving mode of the base station by using the following methods:
Method one: The UE cannot detect a CSI-RS or SSB signal. The base station enables, by using the RRC message or the system information, the UE to determine the energy saving state of the base station. If enabled, the UE may determine the energy saving state of the base station by detecting a CSI-RS or SSB signal. The base station may also configure the threshold, for example, time information and the upper critical value N, of the energy saving state by using the RRC or the system information broadcast.

The base station configures a periodic CSI-RS or SSB resource used for a link recovery, a beam monitoring failure, and a candidate beam period. These signals are transmitted densely. The UE detects the quality of these signals periodically. If the UE cannot detect N signals within a period of time or the UE continuously cannot detect N signals within a period of time, the UE may consider that the base station no longer sends these signals and that the base station enters the energy saving state. The UE detects a CSI-RS or SSB associated with each different energy saving state of the base station.

For example, when the UE cannot detect N1 signals S1 within a period of time 1, the UE considers that the base station enters the light sleep state, and the UE detects an associated signal S2, such as a sparse CSI-RS or SSB.

When the UE cannot detect N2 signals S2 within a period of time 2, the UE considers that the base station enters the deep sleep state, and the UE detects a signal S3 associated the UE, such as a sparser CSI-RS or SSB.

The base station configures a CSI-RS or SSB resource used for radio link monitoring. These signals are transmitted densely. The UE detects the quality of these signals periodically. If the UE cannot detect N signals within a period of time or the UE continuously cannot detect N signals within a period of time, the UE may consider that the base station no longer sends these signals and that the base station enters the energy saving state. When the base station is in the energy saving state, the UE detects an associated CSI-RS or SSB.

For example, when the UE cannot detect N1 signals S1 within a period of time 1, the UE considers that the base station enters the deep sleep state, and the UE detects an associated signal S2, such as a sparse CSI-RS or SSB.

Method two: The UE detects a CSI-RS or SSB signal. The base station enables, by using the RRC message or the system information, the UE to determine the energy saving state of the base station. If the UE is enabled, the UE may determine the energy saving state of the base station by detecting a CSI-RS or SSB signal. The base station may also configure the threshold, for example, time information and the lower critical value N, of the energy saving state by using the RRC or the system information broadcast.

The base station configures a periodic CSI-RS or SSB resource used for a link recovery, a beam monitoring failure, and a candidate beam period in the energy saving state. These signals are transmitted sparsely. The base station configures a periodic CSI-RS or SSB resource used for a link recovery, a beam monitoring failure, and a candidate beam period in the non-energy-saving state. These signals are transmitted densely.

If the UE detects N signals within a period of time or the UE continuously detects N signals within a period of time, the UE may consider that the base station has sent these signals and that the base station has entered the energy saving state or the non-energy-saving state. When the base station is in the energy saving state or the non-energy-saving state, the UE detects an associated CSI-RS or SSB.

For example, when the UE detects N1 signals S1 within a period of time 1, the UE considers that the base station enters the light sleep state, and the UE detects an associated signal S1, such as a dense CSI-RS or SSB.

When the UE detects N2 signals S2 within a period of time 2, the UE considers that the base station enters the non-energy-saving state, and the UE detects an associated signal S2, such as a dense CSI-RS or SSB.

The base station configures a CSI-RS or SSB resource used for radio link monitoring in the energy saving state. These signals are transmitted sparsely. The base station configures a CSI-RS or SSB resource used for radio link monitoring in the non-energy-saving state. These signals are transmitted densely.

If the UE detects N signals within a period of time or the UE continuously detects N signals within a period of time, the UE may consider that the base station has sent these signals and that the base station has entered the energy saving state or the non-energy-saving state. When the base station is in the energy saving state or the non-energy-saving state, the UE detects an CSI-RS or SSB associated with the energy saving state or the non-energy-saving state.

For example, when the UE detects N1 signals S1 within a period of time 1, the UE considers that the base station enters the non-energy-saving state, and the UE detects an signal S1 associated with the non-energy-saving state, such as a dense CSI-RS or SSB.

FIG. 10 is a flowchart of another base station energy saving method according to embodiments of the present application. This embodiment of the present application is embodied based on the previous embodiments of the present application. Referring to FIG. 10, the method of this embodiment of the present application includes the following steps:
In step 710, an energy saving mode is determined.
In step 720, in response to the terminal device being configured with dual connectivity, energy saving is performed on a primary secondary cell group (SCG) cell (PScell).

In this embodiment of the present application, when the terminal device is configured with dual connectivity, the base station may perform corresponding processing on the PScell when the base station is in the energy saving mode so that energy saving is achieved on the PScell.

Further, based on the previous embodiments of the present application, performing energy saving on the PScell includes at least one of the following: indicating, by using a MAC CE or DCI signaling, deactivation of the PScell; or indicating, by using a MAC CE or DCI signaling, activation of the PScell.

In this embodiment of the present application, controlling PScell energy saving may include activating or deactivating the PScell by using signaling. The signaling may be a MAC CE or DCI signaling.

Further, based on the previous embodiments of the present application, the MAC CE or DCI signaling carries at least one of the following information: a cell identity, a deactivation indicator bit, time information, or an activation indicator bit.

In an example embodiment, when the UE is configured with dual connectivity, if the base station requires to take energy saving measures on the PSCell, some services of the PScell are required to be disabled. Energy saving of the PScell may be controlled using the following methods:
Method one: Deactivation of the PSCell is indicated by using a MAC CE or DCI. The MAC CE or DCI may carry a cell identity, a deactivation indicator bit, and time information. The cell identity may be the identifier or the index of the PSCell of the UE. The deactivation indicator bit may be an indicator bit for indicating whether to deactivate the PSCell. For example, the indicator bit is one bit. 1 at the position of the one bit indicates the deactivated state. The start time, the duration, or the end time may also be carried in the time information. After a period of time from the UE receives the MAC CE or DCI, information carried in the MAC CE or DCI is enabled, and the PScell is deactivated. The enabled time, the duration, or the end time may also be carried in the time information.
Method two: Activation of the PSCell is indicated by using a MAC CE or DCI. The MAC CE or DCI is sent by a master cell group (MCG). The MAC CE or DCI may carry a cell identity, an activation indicator bit, and time information. The cell identity may be the identifier or the index of the PSCell of the UE. The activation indicator bit may be an indicator bit for indicating whether to activate the PSCell. For example, the indicator bit is one bit. 1 at the position of the one bit indicates the activated state. The time information may include the start time. After a period of time from the UE receives the MAC CE or DCI, information carried in the MAC CE or DCI is enabled, and the PScell is activated. The enabled time may also be carried in the time information.

Further, based on the previous embodiments of the present application, the method also includes sending a simplified system information block (SIB). The simplified SIB includes cell access information.

In this embodiment of the present application, when sending the SIB, the base station consumes more energy. However, if the SIB is not sent, the UE that moves to the coverage cannot camp. To reduce energy consumption, the base station may send a simplified SIB. The simplified SIB provides only cell access information.

Further, based on the previous embodiments of the present application, the cell access information includes at least one of the following: a public land mobile network (PLMN) identifier, a Type Allocation Code (TAC) identifier, a reserved identifier, PRACH configuration, or SIB 1 scheduling information.

The PLMN identifier may be the identification information of a PLMN. The TAC identifier may be a Type Allocation Code (TAC). The PRACH configuration may be the configuration information of a PRACH. The SIB1 scheduling information may be a scheduling block that carries cell selection information. The reserved identifier may be a reserved identifier bit for identifying customized information.

In an example embodiment, to ensure energy saving of the base station and camping of the UE that moves to the coverage, the base station may use the following method:
The base station sends a simplified SIB, for example, a simplified SIB1, and provides only cell access information, for example, a PLMN identifier, a TAC identifier, a reserved identifier, and PRACH configuration (including frequency domain and delay resources). A certain PRACH resource may be associated with a conventional SIB1 or may be associated with the function of waking up a base station. The simplified SIB1 may also provide scheduling information, such as sending time, of a conventional SIB1. However, a cell or an initial BWP does not provide PDCCH configuration, PUSCH configuration, PDSCH configuration, or other cell configuration. The UE selects the cell to obtain a simplified SIB1. The UE may determine, by using the access information, whether the cell satisfies a camping condition. If the cell satisfies the camping condition, the UE camps. When the UE requires to initiate a service or choose to camp on the cell, the UE may initiate a preamble according to the configuration. However, the UE does not listen to the PDCCH corresponding to a random access response (RAR). After receiving the preamble, the base station considers that the UE camps on the cell and sends a conventional SIB1. The UE receives the SIB1 once again and selects, according to the configuration, whether to camp on the cell or whether to initiate a service.

FIG. 11 is a flowchart of a base station energy saving method according to this embodiment of the present application. This embodiment of the present application may be applied to the case where a base station enters an energy saving mode. The method may be performed by a base station energy saving apparatus. The apparatus is generally integrated in the terminal device. Referring to FIG. 11, the method of this embodiment of the present application includes the following steps:
In step 810, indication information of the base station is acquired.

The indication information can be used for indicating information about the energy saving state of the base station. This indication information can be either implicit or explicit. For example, the indication information may include the type of the energy saving state of the base station, or the indication information may be a signal resource. The terminal can determine the energy saving state of the base station by detecting the signal resource.

Specifically, the terminal device may receive the indication information sent by the base station.

In step 820, resources are detected according to the energy saving mode corresponding to the indication information.

In this embodiment of the present application, the terminal device may detect resources according to the energy saving mode corresponding to the indication information.

In this embodiment of the present application, indication information of the base station is acquired, and corresponding resource detection is performed according to the energy saving mode corresponding to the indication information so that base station energy saving in different scenarios can be achieved. In this manner, the energy consumption of the base station is reduced on the premise that the communication quality is ensured.

Further, based on the previous embodiments of the present application, acquiring the indication information of the base station includes at least one of the following: acquiring periodic signal resources configured by the base station and used in a link recovery, a beam monitoring failure, and a candidate beam period; or acquiring periodic signal resources configured by the base station and used in radio link monitoring.

Further, based on the previous embodiments of the present application, acquiring the indication information of the base station includes acquiring indicated signal resources detected under a preset condition.

Further, based on the previous embodiments of the present application, acquiring the indication information of the base station includes at least one of the following: acquiring a MAC CE or DCI signaling for indicating a cell state; acquiring a MAC CE or DCI signaling for indicating a beam state; or acquiring a MAC CE or DCI signaling for indicating activation or deactivation of a CSI resource or SSB resource.

FIG. 12 is a flowchart of another base station energy saving method according to embodiments of the present application. This embodiment of the present application is embodied based on the previous embodiments of the present application. Referring to FIG. 12, the method of this embodiment of the present application includes the following steps:
In step 910, an enable indication for enabling detection of the energy saving mode is received. The enable indication includes an RRC message or system information.

The enable indication may be information for triggering the terminal to detect the energy saving mode. The information may be the RRC message or the system information received by the terminal.

In this embodiment of the present application, the terminal may receive the enable indication information for enabling detection of the energy saving mode, and the terminal may detect the energy saving mode of the base station after receiving the indication information, for example, the RRC message or the system information for enabling detection of the energy saving mode.

In step 920, a CSI-RS resource or SSB resource corresponding to the energy saving mode is detected.

Specifically, the terminal may detect a resource (including a CSI-RS resource or SSB resource) corresponding to the energy saving mode detected according to the enable indication.

Further, based on the previous embodiments of the present application, the method also includes receiving time period information and at least one minimum signal detection quantity threshold in the enable indication, where the at least one minimum signal detection quantity threshold corresponds to different energy saving modes; acquiring the quantity of CSI-RS resources or SSB resources detected in the time range of the time period information; and in response to the quantity being less than a minimum signal detection quantity threshold of the at least one minimum signal detection quantity threshold, determining that the energy saving mode of the base station is an energy saving mode corresponding to the minimum signal detection quantity threshold.

In this embodiment of the present application, the enable indication may carry a minimum signal detection quantity threshold and time period information for detecting the energy saving mode. Each minimum signal detection quantity threshold may correspond to one energy saving mode. This correspondence may be carried by the enable indication or may be preconfigured. After receiving the enable indication, the terminal device may detect the quantity of CSI-RS resources or SSB resources according to the time period information in the enable indication. If the quantity is less than the minimum signal detection quantity threshold, the energy saving mode of the base station detected by the terminal is the energy saving mode corresponding to the minimum signal detection quantity threshold.

Further, based on the previous embodiments of the present application, the method also includes receiving time period information and at least one maximum signal detection quantity threshold in the enable indication, where the at least one maximum signal detection quantity threshold corresponds to different energy saving modes; acquiring the quantity of CSI-RS resources or SSB resources detected in the time range of the time period information; and in response to the quantity being greater than the at least one maximum signal detection quantity threshold, determining that the energy saving mode of the base station is an energy saving mode corresponding to the maximum signal detection quantity threshold.

In this embodiment of the present application, the enable indication may carry a maximum signal detection quantity threshold and time period information for detecting the energy saving mode. Each maximum signal detection quantity threshold may correspond to one energy saving mode. This correspondence may be carried by the enable indication or may be preconfigured. After receiving the enable indication, the terminal device may detect the quantity of CSI-RS resources or SSB resources according to the time period information in the enable indication. If the quantity is greater than the maximum signal detection quantity threshold, the energy saving mode of the base station detected by the terminal is the energy saving mode corresponding to the maximum signal detection quantity threshold.

Further, based on the previous embodiments of the present application, acquiring the indication information of the base station includes at least one of the following: acquiring a MAC CE or DCI signaling for indicating deactivation of a PScell; or acquiring a MAC CE or DCI signaling for indicating activation of a PScell.

Further, based on the previous embodiments of the present application, the method also includes receiving a simplified SIB. The simplified SIB includes cell access information.

Further, based on the previous embodiments of the present application, the energy saving mode includes at least one of the following: a microsleep mode, a light sleep mode, or a deep sleep mode.

Further, based on the previous embodiments of the present application, detecting the resources according to the energy saving mode corresponding to the indication information includes at least one of the following: in response to being in a microsleep mode, performing one of the following activities: not monitoring a physical downlink control channel (PDCCH), not monitoring a channel state information reference signal (CSI-RS) resource, receiving a sparse CSI-RS resource, not monitoring a synchronization signal block (SSB), receiving a sparse SSB, not sending an uplink shared channel (ULSCH), not sending a sounding reference signal (SRS), sending a sparse SRS, not reporting channel state information (CSI), not sending a physical uplink control channel (PUCCH), sending a sparse L1-reference signal received energy (L1-RSRP), clearing a hybrid automatic repeat request (HARQ) buffer, deactivating all bandwidth parts (BWPs), or clearing all uplink resources; in response to being in a light sleep mode, performing one of the following activities: not monitoring a PDCCH, not monitoring a CSI-RS resource, receiving a sparse CSI-RS resource, not monitoring an SSB, receiving a sparse SSB, not sending a ULSCH, not sending an SRS, sending a sparse SRS, not reporting CSI, not sending a PUCCH, sending a sparse L1-RSRP, clearing a HARQ buffer, deactivating all BWPs, or clearing all uplink resources; or in response to being in a deep sleep mode, performing one of the following activities: not monitoring a PDCCH, not monitoring a CSI-RS resource, receiving a sparse CSI-RS resource, not monitoring an SSB, receiving a sparse SSB, not sending a ULSCH, not sending an SRS, not reporting CSI, not sending a PUCCH, clearing a HARQ buffer, deactivating all BWPs, or clearing all uplink resources.

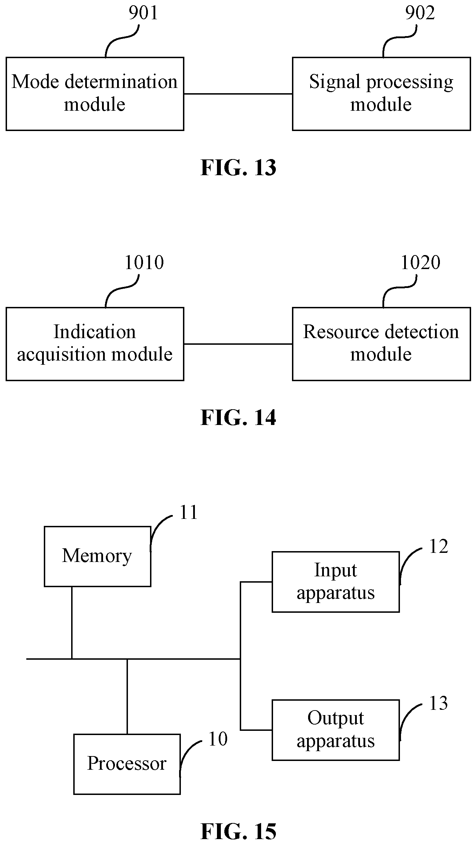

FIG. 13 is a block diagram of a base station energy saving apparatus according to embodiments of the present application. The apparatus can perform the base station energy saving method of any embodiment of the present application and has function modules and beneficial effects corresponding to the performed method. The apparatus may be implemented by software and/or hardware. As shown in FIG. 13, the apparatus of this embodiment of the present application includes a mode determination module 901 configured to determine an energy saving mode; and a signal processing module 902 configured to perform signal processing corresponding to the energy saving mode.

In embodiments of the present application, the mode determination module determines an energy saving mode, and the signal processing module performs corresponding signal processing according to the energy saving mode, thereby achieving energy saving of a base station in different cases and thus reducing energy consumption of the base station while ensuring the communication quality.

Further, based on the previous embodiment of the present application, the energy saving mode includes at least one of the following: a microsleep mode, a light sleep mode, or a deep sleep mode.

Further, based on the previous embodiments of the present application, the time granularity of the duration of the energy saving mode includes at least one of the following: a symbol level, a millisecond level, a ten-millisecond level, a hundred-millisecond level, a second level, or a minute level.

Further, based on the previous embodiments of the present application, the signal processing module 902 includes a microsleep unit configured to, in response to being in a microsleep mode, stop sending and/or receiving a first-range signal. The first-range signal includes at least one of the following: a physical downlink control channel (PDCCH) signal, a physical downlink shared channel (PDSCH) signal, or a physical uplink shared channel (PUSCH) signal.

Further, based on the previous embodiments of the present application, the signal processing module 902 includes a light sleep unit configured to perform at least one of the following: in response to being in a light sleep mode, stopping sending and/or receiving a second-range signal, where the second-range signal includes at least one of the following: a PDCCH signal, a PDSCH signal, a channel state information reference signal (CSI-RS), a PUSCH signal, or a channel sounding reference signal (SRS); or in response to being in a light sleep mode, sending a sparse periodic CSI-RS and/or a sparse periodic synchronization signal block (SSB).

Further, based on the previous embodiments of the present application, the signal processing module 902 includes a deep sleep unit configured to perform at least one of the following: in response to being in a deep sleep mode, disabling sending of all downlink signals and disabling receiving of all uplink signals; in response to being in a deep sleep mode, sending a sparse periodic SSB; or in response to being in a deep sleep mode, receiving a sparse periodic physical random access channel (PRACH).

Further, based on the previous embodiments of the present application, the energy saving mode is determined according to at least one of the following: a beam load, a cell load, a traffic data volume, or a traffic delay sensitivity.

Further, based on the previous embodiments of the present application, the mode determination module 901 includes a non-energy-saving determination unit, a microsleep determination unit, a light sleep determination unit, and a deep sleep determination unit.

The non-energy-saving determination unit is configured to determine the energy saving mode as a non-energy-saving mode under a first preset condition. The first preset condition includes at least one of the following: The beam load is greater than a first beam load threshold, the cell load is greater than a first cell load threshold, the traffic data volume is greater than a first traffic volume threshold, or the traffic delay sensitivity is delay sensitive.

The microsleep determination unit is configured to determine the energy saving mode as a microsleep mode under a second preset condition. The second preset condition includes at least one of the following: The beam load is less than or equal to the first beam load threshold and greater than a second beam load threshold, the cell load is less than or equal to the first cell load threshold and greater than a second cell load threshold, the traffic data volume is less than or equal to the first traffic volume threshold and greater than a second traffic volume threshold, or the traffic delay sensitivity is delay insensitive.

The light sleep determination unit is configured to determine the energy saving mode as a light sleep mode under a third preset condition. The third preset condition includes at least one of the following: The beam load is less than or equal to the second beam load threshold and greater than a third beam load threshold, the cell load is less than or equal to the second cell load threshold and greater than a third cell load threshold, the traffic data volume is less than or equal to the second traffic volume threshold and greater than a third traffic volume threshold, or the traffic delay sensitivity is delay insensitive.

The deep sleep determination unit is configured to determine the energy saving mode as a deep sleep mode under a fourth preset condition. The fourth preset condition includes at least one of the following: The beam load is less than or equal to the third beam load threshold, the cell load is less than or equal to the third load threshold, the traffic data volume is less than or equal to the third traffic volume threshold, or the traffic delay sensitivity is delay insensitive.

Further, based on the previous embodiments of the present application, the apparatus also includes an energy saving indication module configured to indicate the energy saving mode by the terminal device.

Further, based on the previous embodiments of the present application, the energy saving indication module is configured to configure periodic signal resources used by the terminal device in a link recovery, a beam monitoring failure, and a candidate beam period; or configure periodic signal resources used by the terminal device in radio link monitoring.

Further, based on the previous embodiments of the present application, the signal resources include a CSI-RS resource and an SSB resource.

Further, based on the previous embodiments of the present application, the signal resources are configured by using a radio resource control (RRC) message.

Further, based on the previous embodiments of the present application, configuration parameters of the signal resources include at least two of the following: start time, duration, and end time.

Further, based on the previous embodiments of the present application, the energy saving indication module is configured to indicate signal resources detected by the terminal device under a preset condition.

Further, based on the previous embodiments of the present application, the signal resources are configured for radio link monitoring, and the signal resources include a periodic CSI-RS resource or SSB resource, a semi-persistent CSI-RS resource or SSB resource, and a non-periodic CSI-RS resource or SSB resource.

Further, based on the previous embodiments of the present application, the preset condition includes at least one of the following: A dense CSI-RS resource or SSB resource is disabled, the base station enters an energy saving state, the base station indicates an enabled CSI-RS resource or SSB resource to the terminal device, the terminal device detects that the base station enters an energy saving state, the terminal device detects that a dense CSI-RS resource or SSB resource is disabled, the terminal device detects a sparse CSI-RS or SSB signal, the base station enables a dense CSI-RS resource or SSB resource, the base station enters a non-energy-saving state, the base station indicates a disabled CSI-RS resource or SSB resource to the terminal device, the terminal device detects that the base station enters a non-energy-saving state, or the terminal device detects that a dense CSI-RS resource or SSB resource is enabled.

Further, based on the previous embodiments of the present application, the energy saving indication module is configured to indicate the cell state of the base station to the terminal device according to a medium access control control element (MAC CE) or downlink control information (DCI) signaling; indicate the beam state of the base station to the terminal device according to a MAC CE or DCI signaling; or indicate an activated or deactivated CSI resource or SSB resource to the terminal device according to a MAC CE or DCI signaling.

Further, based on the previous embodiments of the present application, the MAC CE or DCI signaling carries at least one of the following information: a cell identity, an energy saving state indicator bit, time information, an activation identifier, a frequency domain identifier, a CSI-RS identifier, or an SSB identifier. The time information includes at least two of start time, duration, and end time.

Further, based on the previous embodiments of the present application, the energy saving indication module is configured to enable, by using the RRC message, the terminal device to detect a CSI-RS resource or SSB resource to determine the energy saving mode of the base station; or enable, by using the system information, the terminal device to detect a CSI-RS resource or SSB resource to determine the energy saving mode of the base station.

Further, based on the previous embodiments of the present application, the RRC message or the system information carries the threshold of the energy saving mode. The threshold includes at least one of the following: time period information, a maximum signal detection quantity threshold, or a minimum signal detection quantity threshold.

Further, based on the previous embodiments of the present application, the signal processing module 902 also includes a primary secondary cell group (SCG) cell energy saving unit configured to, in response to the terminal device being configured with dual connectivity, perform energy saving on a primary secondary cell group (SCG) cell (PScell).

Further, based on the previous embodiments of the present application, the primary secondary cell group (SCG) cell energy saving unit is configured to indicate, by using a MAC CE or DCI signaling, deactivation of the PScell; or indicate, by using a MAC CE or DCI signaling, activation of the PScell.

Further, based on the previous embodiments of the present application, the MAC CE or DCI signaling carries at least one of the following information: a cell identity, a deactivation indicator bit, time information, or an activation indicator bit.

Further, based on the previous embodiments of the present application, the apparatus also includes a simplified information module configured to send a simplified system information block (SIB). The simplified SIB includes cell access information.

Further, based on the previous embodiments of the present application, the cell access information includes at least one of the following: a public land mobile network (PLMN) identifier, a Type Allocation Code (TAC) identifier, a reserved identifier, PRACH configuration, or SIB1 scheduling information.

FIG. 14 is a block diagram of another base station energy saving apparatus according to embodiments of the present application. The apparatus can perform the base station energy saving method of any embodiment of the present application and has function modules and beneficial effects corresponding to the performed method. The apparatus may be implemented by software and/or hardware. As shown in FIG. 14, the apparatus of this embodiment of the present application includes an indication acquisition module 1010 configured to acquire the indication information of the base station; and a resource detection module 1020 configured to detect resources according to the energy saving mode corresponding to the indication information.

Further, based on the previous embodiments of the present application, the indication acquisition module 1010 is configured to perform at least one of the following: acquiring periodic signal resources configured by the base station and used in a link recovery, a beam monitoring failure, and a candidate beam period; or acquiring periodic signal resources configured by the base station and used in radio link monitoring.

Further, based on the previous embodiments of the present application, the indication acquisition module 1010 is configured to acquire a preset condition of the detected signal resources.

Further, based on the previous embodiments of the present application, the indication acquisition module 1010 is configured to acquire at least one of the following: a MAC CE or DCI signaling for indicating a cell state; a MAC CE or DCI signaling for indicating a beam state; or a MAC CE or DCI signaling for indicating activation or deactivation of a CSI resource or SSB resource.

Further, based on the previous embodiments of the present application, the indication acquisition module 1010 is configured to, in response to receiving an enable RRC message, detect a CSI-RS resource or SSB resource for indicating the energy saving mode; or, in response to receiving system information, detect a CSI-RS resource or SSB resource for indicating the energy saving mode.

Further, based on the previous embodiments of the present application, the indication acquisition module 1010 is configured to acquire at least one of the following: a MAC CE or DCI signaling for indicating deactivation of a primary secondary cell group (SCG) cell (PScell); or a MAC CE or DCI signaling for indicating activation of a PScell.

Further, based on the previous embodiments of the present application, the apparatus also includes a simplified information receiving unit configured to receive a simplified SIB. The simplified SIB includes cell access information.

Further, based on the previous embodiments of the present application, the energy saving mode includes at least one of the following: a microsleep mode, a light sleep mode, or a deep sleep mode.

Further, based on the previous embodiments of the present application, the resource detection module 1020 includes a microsleep detection unit, a light sleep detection unit, and a deep sleep detection unit.

The microsleep detection unit is configured to, in response to being in a microsleep mode, perform one of the following activities: not monitoring a physical downlink control channel (PDCCH), not monitoring a channel state information reference signal (CSI-RS) resource, receiving a sparse CSI-RS resource, not monitoring a synchronization signal block (SSB), receiving a sparse SSB, not sending an uplink shared channel (ULSCH), not sending a sounding reference signal (SRS), sending a sparse SRS, not reporting channel state information (CSI), not sending a physical uplink control channel (PUCCH), sending a sparse L1-reference signal received energy (L1-RSRP), clearing a hybrid automatic repeat request (HARQ) buffer, deactivating all bandwidth parts (BWPs), or clearing all uplink resources.

The light sleep detection unit is configured to, in response to being in a light sleep mode, perform one of the following activities: not monitoring a PDCCH, not monitoring a CSI-RS resource, receiving a sparse CSI-RS resource, not monitoring an SSB, receiving a sparse SSB, not sending a ULSCH, not sending an SRS, sending a sparse SRS, not reporting CSI, not sending a PUCCH, sending a sparse L1-RSRP, clearing a HARQ buffer, deactivating all BWPs, or clearing all uplink resources.

The deep sleep detection unit is configured to, in response to being in a deep sleep mode, perform one of the following activities: not monitoring a PDCCH, not monitoring a CSI-RS resource, receiving a sparse CSI-RS resource, not monitoring an SSB, receiving a sparse SSB, not sending a ULSCH, not sending an SRS, not reporting CSI, not sending a PUCCH, clearing a HARQ buffer, deactivating all BWPs, or clearing all uplink resources.

FIG. 15 is a block diagram of a base station according to embodiments of the present application. The base station includes a processor 10 and a memory 11. One or more processors 10 may be provided in the base station. One processor 10 is shown as an example in FIG. 15. The processor 10 and the memory 11 in the base station may be connected via a bus or in other manners. In FIG. 15, the connection via a bus is shown as an example.

As a computer-readable storage medium, the memory 11 may be configured to store software programs, computer-executable programs, and modules, such as programs corresponding to the base station energy saving method of any embodiment of the present application and modules (including the mode determination module 901 and the signal processing module 902) corresponding to the base station energy saving apparatus of any embodiment of the present application. The processor 10 executes software programs, instructions, and modules stored in the memory 11 to perform functions and data processing of the electronic device, that is, perform the base station energy saving method.

The memory 11 may include a program storage region and a data storage region. The program storage region may store an operating system and a program required by at least one function. The data storage region may store data created based on the use of the electronic device. Additionally, the memory 11 may include a high-speed random-access memory or a nonvolatile memory such as at least one disk memory, a flash memory, or another nonvolatile solid-state memory. In some examples, the memory 11 may further include a memory remotely disposed with respect to the processor 10. These remote memories may be connected to the electronic device via a network. Examples of the preceding network include, but are not limited to, the Internet, an intranet, a local area network, a mobile communication network, and a combination thereof.

The input apparatus 12 may be configured to receive inputted digital or character information and generate key signal input related to user settings and function control of the electronic device. The output apparatus 13 may include a display device such as a display screen.

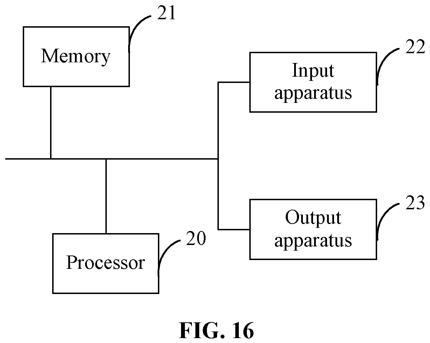

FIG. 16 is a block diagram of a terminal device according to embodiments of the present application. The terminal device includes a processor 20 and a memory 21. One or more processors 20 may be provided in the terminal. One processor 20 is shown as an example in FIG. 16. The processor 20 and the memory 21 in the terminal device may be connected via a bus or in other manners. In FIG. 16, the connection via a bus is shown as an example.

As a computer-readable storage medium, the memory 21 may be configured to store software programs, computer-executable programs, and modules, such as programs corresponding to the base station energy saving method of any embodiment of the present application and modules (including the indication acquisition module 1010 and the resource detection module 1020) corresponding to the base station energy saving apparatus apparatus of any embodiment of the present application. The processor 20 executes software programs, instructions, and modules stored in the memory 21 to perform functions and data processing of the electronic device, that is, perform the base station energy saving method.

The memory 21 may mainly include a program storage region and a data storage region. The program storage region may store an operating system and a program required by at least one function. The data storage region may store data created based on the use of the electronic device. Additionally, the memory 21 may include a high-speed random-access memory or a nonvolatile memory such as at least one disk memory, a flash memory, or another nonvolatile solid-state memory. In some examples, the memory 21 may further include a memory remotely disposed with respect to the processor 20. These remote memories may be connected to the electronic device via a network. Examples of the preceding network include, but are not limited to, the Internet, an intranet, a local area network, a mobile communication network, and a combination thereof.

The input apparatus 22 may be configured to receive inputted digital or character information and generate key signal input related to user settings and function control of the electronic device. The output apparatus 23 may include a display device such as a display screen.

Embodiments of the present application further provide a storage medium containing computer-executable instructions that, when executed by a computer processor, is used for performing a base station energy saving method.

In an embodiment, the preceding base station energy saving method includes determining the energy saving mode; and performing signal processing corresponding to the energy saving mode.

In an embodiment, the preceding base station energy saving method includes acquiring indication information of a base station; and detecting resources according to the energy saving mode corresponding to the indication information.

From the preceding description of embodiments, it will be apparent to those skilled in the art that the present application may be implemented by use of software and necessary generalpurpose hardware, or may be certainly implemented by hardware, but the former is a preferred embodiment in many cases. Based on this understanding, the technical solutions of the present application substantially, or the part contributing to the related art, may be embodied in the form of a software product. The computer software product may be stored in a computer-readable storage medium such as a floppy disk, a read-only memory (ROM), a random-access memory (RAM), a flash memory, a hard disk, or an optical disk of a computer and includes several instructions for causing a computer device (which may be a personal computer, a server, or a network device) to perform the method in the embodiments of the present application.

It is to be noted that units and modules that are included in the embodiment of the apparatus are merely divided according to functional logic, and the division is not limited to this as long as the corresponding functions can be performed. Additionally, the specific names of function units are merely intended for distinguishing between each other and are not to limit the scope of the present application.

It is to be understood by those having ordinary skill in the art that some or all steps of the preceding method and function modules/units in the preceding apparatus or device may be implemented as software, firmware, hardware and suitable combinations thereof.

In the hardware implementation, the division of the preceding function modules/units may not correspond to the division of physical components. For example, one physical component may have multiple functions, or one function or step may be performed jointly by several physical components. Some or all physical components may be implemented as software executed by a processor such as a central processing unit, a digital signal processor or a microprocessor, may be implemented as hardware, or may be implemented as integrated circuits such as applicationspecific integrated circuits. The corresponding software may be distributed on computer-readable media. The computer-readable media may include computer storage media (or non-transitory media) and communication media (or transitory media). As is known to those having ordinary skill in the art, the term computer storage media include volatile and nonvolatile media as well as removable and non-removable media implemented in any method or technology for storing information (such as computer-readable instructions, data structures, program modules or other data). The computer storage media include, but are not limited to, an RAM, an ROM, an electrically erasable programmable read-only memory (EEPROM), a flash memory, or other memory technologies, a compact disc read-only memory (CD-ROM), a digital video disc (DVD) or other optical disk memories, a magnetic cassette, a magnetic tape, a magnetic disk memory or other magnetic storage apparatuses, or any other medium used for storing the desired information and accessible by a computer. Additionally, as is known to those having ordinary skill in the art, the communication media generally include computer-readable instructions, data structures, program modules or other data in carriers or in modulated data signals transported in other transport mechanisms and may include any information delivery medium.

## Claims

1. A base station energy saving method, the method being applied to a base station and comprising:
determining an energy saving mode; and
performing signal processing corresponding to the energy saving mode.

2. The method of claim 1, wherein the energy saving mode comprises at least one of the following:
a microsleep mode, a light sleep mode, or a deep sleep mode.

3. The method of claim 1, wherein a time granularity of a duration of the energy saving mode comprises at least one of the following: a symbol level, a millisecond level, a ten-millisecond level, a hundred-millisecond level, a second level, or a minute level.

4. The method of claim 1, wherein performing the signal processing corresponding to the energy saving mode comprises:
in response to being in a microsleep mode, stopping at least one of the following: sending a first-range signal, or receiving a first-range signal, wherein
the first-range signal comprises at least one of the following: a physical downlink control channel (PDCCH) signal, a physical downlink shared channel (PDSCH) signal, or a physical uplink shared channel (PUSCH) signal.

5. The method of claim 1, wherein performing the signal processing corresponding to the energy saving mode comprises at least one of the following:
in response to being in a light sleep mode, stopping at least one of the following: sending a second-range signal, or receiving a second-range signal, wherein the second-range signal comprises at least one of the following: a PDCCH signal, a PDSCH signal, a channel state information reference signal (CSI-RS), a PUSCH signal, or a channel sounding reference signal (SRS); or
in response to being in a light sleep mode, sending at least one of the following: a sparse periodic CSI-RS or a sparse periodic synchronization signal block (SSB).

6. The method of claim 1, wherein performing the signal processing corresponding to the energy saving mode comprises at least one of the following:
in response to being in a deep sleep mode, disabling sending of all downlink signals and disabling receiving of all uplink signals;
in response to being in a deep sleep mode, sending a sparse periodic SSB; or
in response to being in a deep sleep mode, receiving a sparse periodic physical random access channel (PRACH).

7. The method of claim 1, wherein the energy saving mode is determined according to at least one of the following: a beam load, a cell load, a traffic data volume, or a traffic delay sensitivity.

8. The method of claim 1, wherein determining the energy saving mode comprises:
determining the energy saving mode as a non-energy-saving mode under a first preset condition, wherein the first preset condition comprises at least one of the following: a beam load is greater than a first beam load threshold, a cell load is greater than a first cell load threshold, a traffic data volume is greater than a first traffic volume threshold, or a traffic delay sensitivity is delay sensitive;
determining the energy saving mode as a microsleep mode under a second preset condition, wherein the second preset condition comprises at least one of the following: the beam load is less than or equal to the first beam load threshold and greater than a second beam load threshold, the cell load is less than or equal to the first cell load threshold and greater than a second cell load threshold, the traffic data volume is less than or equal to the first traffic volume threshold and greater than a second traffic volume threshold, or the traffic delay sensitivity is delay insensitive;
determining the energy saving mode as a light sleep mode under a third preset condition, wherein the third preset condition comprises at least one of the following: the beam load is less than or equal to the second beam load threshold and greater than a third beam load threshold, the cell load is less than or equal to the second cell load threshold and greater than a third cell load threshold, the traffic data volume is less than or equal to the second traffic volume threshold and greater than a third traffic volume threshold, or the traffic delay sensitivity is delay insensitive; and
determining the energy saving mode as a deep sleep mode under a fourth preset condition, wherein the fourth preset condition comprises at least one of the following: the beam load is less than or equal to the third beam load threshold, the cell load is less than or equal to the third cell load threshold, the traffic data volume is less than or equal to the third traffic volume threshold, or the traffic delay sensitivity is delay insensitive.

9. The method of claim 1, further comprising:
indicating information about the energy saving mode.

10. The method of claim 9, wherein indicating the information about the energy saving mode comprises at least one of the following:
configuring periodic signal resources used by a terminal device in a link recovery, a beam monitoring failure, and a candidate beam period; or
configuring periodic signal resources used by a terminal device in radio link monitoring.

11. The method of claim 10, wherein the signal resources comprise a CSI-RS resource and an SSB resource.

12. The method of claim 10, wherein the signal resources are configured by using a radio resource control (RRC) message.

13. The method of claim 10, wherein configuration parameters of the signal resources comprise at least two of the following: start time, duration, and end time.

14. The method of claim 9, wherein indicating the information about the energy saving mode comprises:
indicating signal resources detected by a terminal device under a preset condition.

15. The method of claim 14, wherein the signal resources are configured for radio link monitoring, and the signal resources comprise:
a periodic CSI-RS resource or SSB resource, a semi-persistent CSI-RS resource or SSB resource, and a non-periodic CSI-RS resource or SSB resource.

16. The method of claim 14, wherein the preset condition comprises at least one of the following: a dense CSI-RS resource or SSB resource is disabled, the base station enters an energy saving state, the base station indicates an enabled CSI-RS resource or SSB resource to the terminal device, the terminal device detects that the base station enters an energy saving state, the terminal device detects that a dense CSI-RS resource or SSB resource is disabled, the terminal device detects a sparse CSI-RS or SSB signal, the base station enables a dense CSI-RS resource or SSB resource, the base station enters a non-energy-saving state, the base station indicates a disabled CSI-RS resource or SSB resource to the terminal device, the terminal device detects that the base station enters a non-energy-saving state, or the terminal device detects that a dense CSI-RS resource or SSB resource is enabled.

17. The method of claim 9, wherein indicating the information about the energy saving mode comprises at least one of the following:
indicating a cell state to a terminal device according to a medium access control control element (MAC CE) or downlink control information (DCI) signaling;
indicating a beam state to a terminal device according to a MAC CE or DCI signaling; or
indicating an activated or deactivated CSI resource or SSB resource to a terminal device according to a MAC CE or DCI signaling.

18. The method of claim 17, wherein the MAC CE or DCI signaling carries at least one of the following information: a cell identity, an energy saving state indicator bit, time information, an activation identifier, a frequency domain identifier, a CSI-RS identifier, or an SSB identifier, wherein the time information comprises at least two of start time, duration, and end time.

19. The method of claim 9, wherein indicating the information about the energy saving mode comprises:
enabling, by using an enable indication, a terminal device to detect the energy saving mode, wherein the enable indication comprises an RRC message or system information.

20. The method of claim 19, wherein enabling, by using the enable indication, the terminal device to detect the energy saving mode comprises one of the following:
enabling, by using the RRC message, the terminal device to detect a CSI-RS resource or SSB resource to determine the energy saving mode of the base station; or
enabling, by using the system information, the terminal device to detect a CSI-RS resource or SSB resource to determine the energy saving mode of the base station.

21. The method of claim 19, wherein the enable indication carries a threshold of the energy saving mode, wherein the threshold comprises at least one of the following: time period information, a maximum signal detection quantity threshold, or a minimum signal detection quantity threshold.

22. The method of claim 1, wherein performing the signal processing corresponding to the energy saving mode comprises:
in response to a terminal device being configured with dual connectivity, performing energy saving on a primary secondary cell group (SCG) cell (PScell).

23. The method of claim 22, wherein performing the energy saving on the PScell comprises at least one of the following:
indicating, by using a MAC CE or DCI signaling, deactivation of the PScell; or
indicating, by using a MAC CE or DCI signaling, activation of the PScell.

24. The method of claim 23, wherein the MAC CE or DCI signaling carries at least one of the following information:
a cell identity, a deactivation indicator bit, time information, or an activation indicator bit.

25. The method of claim 1, further comprising:
sending a simplified system information block (SIB), wherein the simplified SIB comprises cell access information.

26. The method of claim 25, wherein the cell access information comprises at least one of the following: a public land mobile network (PLMN) identifier, a Type Allocation Code (TAC) identifier, a reserved identifier, PRACH configuration, or SIB1 scheduling information.

27. A base station energy saving method, the method being applied to a terminal device and comprising:
acquiring indication information of a base station; and
detecting resources according to an energy saving mode corresponding to the indication information.

28. The method of claim 27, wherein acquiring the indication information of the base station comprises at least one of the following:
acquiring periodic signal resources configured by the base station and used in a link recovery, a beam monitoring failure, and a candidate beam period; or
acquiring periodic signal resources configured by the base station and used in radio link monitoring.

29. The method of claim 27, wherein acquiring the indication information of the base station comprises:
acquiring indicated signal resources detected under a preset condition.

30. The method of claim 27, wherein acquiring the indication information of the base station comprises at least one of the following:
acquiring a MAC CE or DCI signaling for indicating a cell state;
acquiring a MAC CE or DCI signaling for indicating a beam state; or
acquiring a MAC CE or DCI signaling for indicating activation or deactivation of a CSI resource or SSB resource.

31. The method of claim 27, wherein acquiring the indication information of the base station comprises:
receiving an enable indication for enabling detection of the energy saving mode, wherein the enable indication comprises an RRC message or system information.

32. The method of claim 31, wherein detecting the resources according to the energy saving mode corresponding to the indication information comprises:
detecting a CSI-RS resource or SSB resource corresponding to the energy saving mode.

33. The method of claim 31, further comprising:
receiving time period information and at least one minimum signal detection quantity threshold in the enable indication, wherein the at least one minimum signal detection quantity threshold corresponds to different energy saving modes;
acquiring a quantity of CSI-RS resources or SSB resources detected in a time range of the time period information; and
in response to the quantity being less than a minimum signal detection quantity threshold of the at least one minimum signal detection quantity threshold, determining that the energy saving mode of the base station is an energy saving mode corresponding to the minimum signal detection quantity threshold.

34. The method of claim 31, further comprising:
receiving time period information and at least one maximum signal detection quantity threshold in the enable indication, wherein the at least one maximum signal detection quantity threshold corresponds to different energy saving modes;
acquiring a quantity of CSI-RS resources or SSB resources detected in a time range of the time period information; and
in response to the quantity being greater than the at least one maximum signal detection quantity threshold, determining that the energy saving mode of the base station is an energy saving mode corresponding to the maximum signal detection quantity threshold.

35. The method of claim 27, wherein acquiring the indication information of the base station comprises at least one of the following:
acquiring a MAC CE or DCI signaling for indicating deactivation of a primary secondary cell group (SCG) cell (PScell); or
acquiring a MAC CE or DCI signaling for indicating activation of a PScell.

36. The method of claim 27, further comprising:
receiving a simplified SIB, wherein the simplified SIB comprises cell access information.

37. The method of claim 27, wherein the energy saving mode comprises at least one of the following: a microsleep mode, a light sleep mode, or a deep sleep mode.

38. The method of claim 27, wherein detecting the resources according to the energy saving mode corresponding to the indication information comprises at least one of the following:
in response to being in a microsleep mode, performing one of the following activities: not monitoring a physical downlink control channel (PDCCH), not monitoring a channel state information reference signal (CSI-RS) resource, receiving a sparse CSI-RS resource, not monitoring a synchronization signal block (SSB), receiving a sparse SSB, not sending an uplink shared channel (ULSCH), not sending a sounding reference signal (SRS), sending a sparse SRS, not reporting channel state information (CSI), not sending a physical uplink control channel (PUCCH), sending a sparse L1-reference signal received energy (L1-RSRP), clearing a hybrid automatic repeat request (HARQ) buffer, deactivating all bandwidth parts (BWPs), or clearing all uplink resources;
in response to being in a light sleep mode, performing one of the following activities: not monitoring a PDCCH, not monitoring a CSI-RS resource, receiving a sparse CSI-RS resource, not monitoring an SSB, receiving a sparse SSB, not sending a ULSCH, not sending an SRS, sending a sparse SRS, not reporting CSI, not sending a PUCCH, sending a sparse L1-RSRP, clearing a HARQ buffer, deactivating all BWPs, or clearing all uplink resources; or
in response to being in a deep sleep mode, performing one of the following activities: not monitoring a PDCCH, not monitoring a CSI-RS resource, receiving a sparse CSI-RS resource, not monitoring an SSB, receiving a sparse SSB, not sending a ULSCH, not sending an SRS, not reporting CSI, not sending a PUCCH, clearing a HARQ buffer, deactivating all BWPs, or clearing all uplink resources.

39. A base station, comprising:
at least one processor; and
a memory configured to store at least one program,
wherein when the at least one program is executed by the at least one processor, the at least one processor performs the method of any one of claims 1 to 26.

40. A terminal device, comprising:
at least one processor; and
a memory configured to store at least one program,
wherein when the at least one program is executed by the at least one processor, the at least one processor performs the method of any one of claims 27 to 38.

41. A computer-readable storage medium storing at least one program which, when executed by at least one processor, causes the at least one processor to perform the method of any one of claims 1 to 38.
